# EUROPEAN PATENT SPECIFICATION

(11) **EP 2 392 478 B1**
(45) Date of publication and mention of the grant of the patent: **12.08.2015**
(21) Application number: 11250558.1
(22) Date of filing: 26.05.2011
(51) Int. Cl.: B60B 27/00, F16C 19/56

(54) **Wheel hub assembly**
Radnabenanordnung
Ensemble formant moyeu de roue

(30) Priority: 01.06.2010 US 802038
(43) Date of publication of application: 07.12.2011
(73) Proprietor: Consolidated Metco, Inc., Vancouver, WA 98661 (US)
(72) Inventor: Severini, Frank, Portland Oregon 97214 (US); Lippis, Dan, Portland Oregon 97229 (US); Crowley, Conor, Beaverton, Oregon 97006 (US); Hodge, John, Portland Oregon 97231 (US)
(74) Representative: Davies, Christopher Robert

(56) References cited:
- EP-A2- 0 849 487
- DE-C1- 4 128 508
- US-A- 4 121 871
- US-A- 5 386 630
- US-A- 6 149 244
- US-A1- 2007 052 282

## Description

### Field of the Invention

This invention relates to wheel hub assemblies and more particularly, to a wheel hub assembly having a pre-positioned spindle nut according to the preamble of claim 1 and as it is disclosed in DE 4128508C.

### Background of the Invention

A wheel hub assembly is mounted on the spindle of a vehicle axle to provide a rotatable mounting surface on which to mount a wheel and tire assembly. Many different types of hub assemblies are available that have been designed for a myriad of different vehicle applications. For example, several different hub designs are available for heavy-duty trucks depending upon whether the wheel is a driven wheel, trailer wheel, or tandem wheel. Regardless of the hub's specific application, each hub assembly generally has the same basic components: inboard and outboard tapered roller bearings; a spacer disposed between the inboard and outboard tapered roller bearings; and a hub to house the bearings, spacer, and an inner seal.

Partially preassembled hub assemblies are available directly from manufacturers for installation on vehicle axles. These hub assemblies are manufactured to strict quality requirements and close dimensional tolerances, allowing the hub assembly to be placed directly on the spindle of an axle without the need for manual bearing adjustment. These hub assemblies, however, use separate spindle nuts that cannot be attached to the hub assembly until after the hub is installed on the spindle. Consequently, unless otherwise retained, the components comprising the partially preassembled hub assembly may become dislodged during shipment.

To retain hub assembly components in their factory assembled position, prior art hub assemblies have a disposable cap bolted to the hub during assembly. The disposable cap abuts the outboard bearing, affixing the outboard bearing and spacer inside the hub against the inboard bearing and the installed seal. US 6149244 discloses a wheel hub assembly provided with a cap to hold an outboard bearing in place.

During installation of the prior art hub assembly, the spindle of the vehicle axle is inserted into the bore of the hub assembly, seating the inboard and outboard bearings onto the spindle. After the partially, preassembled hub is installed on the spindle; the disposable cap and cap mounting bolts are removed from the hub. The separate retaining nut, or spindle nut assembly, is then installed on the spindle.

It would be desirable to further eliminate loose components associated with the prior art, partially preassembled hub assembly (such as the spindle nut and disposable cap) to further simplify shipment and installation.

### Summary of the Invention

The present invention provides a hub assembly as claimed in claim 1.

A novel, preassembled hub assembly is presented which includes a pre-positioned spindle nut assembly. The spindle nut assembly is affixed inside the bore against axially outward displacement, allowing the spindle nut assembly to retain not only its own components, but also the outboard bearing and spacer within the hub. This allows the hub assembly to be shipped and installed as a single component in some embodiments.

The hub assembly comprises a hub in which are assembled, in one embodiment, inboard and outboard bearings, a spacer disposed between the bearings, a lubricant steal abutting the inboard bearing, a retaining nut, and a bore retaining ring disposed in the bore of the hub. In some embodiments, the spindle nut assembly comprises a retaining nut and washer.

In one embodiment, to retain the outboard bearing, spacer, and spindle nut assembly inside the hub, a retaining ring is seated in a groove in the surface of the bore. The bore retaining ring abuts the retaining nut; affixing the retaining nut, washer, and outboard bearing inside the hub against outward axial displacement.

With all of the hub assembly components affixed to the hub in their installation position, the hub assembly may be shipped, ready for direct installation on a vesicle spindle. Installers of the novel hub assembly, in certain embodiments, need only place the spindle through the hub assembly and torque the affixed, pre-positioned retaining nut to the desired pre-load compression.

### Brief Description of the Figures

Various embodiments of the preassembled hub assembly are described and illustrated in the accompanying figures. The figures are provided as examples only and are not intended to be considered as limitations to the invention. Consequently, the preassembled hub assembly is illustrated by way of example and not by limitation in the accompanying figures in which:
FIG. 1 is an assembly drawing of an exemplary embodiment of the novel hub assembly;
FIG. 2 is an isometric, sectional view of the assembled exemplary embodiment of FIG. 1;
FIGs. 2a and 2b are views of an alternate embodiment of a retaining component;
FIGs. 2c and 2d are views of an alternate embodiment of a retaining component;
FIGs. 2e and 2f are views of an alternate embodiment of a retaining component;
FIGs. 2g and 2h are views of an alternate embodiment of a retaining component;
FIGs. 2i and 2j are views of an alternate embodiment of a retaining component;
FIGs. 2k and 2l are views of an alternate embodiment of a retaining component
FIG. 3 is a detailed orthographic front view of the retaining nut illustrated in FIG. 1;
FIG. 4 is a detailed orthographic side view of the retaining nut illustrated in FIG. 1;
FIG. 5 is an exploded, isometric view of a spindle retaining nut assembly, not in accordance with the invention.
FIG. 6 is an exploded assembly drawing of the arrangement of FIG. 5 in conjunction with a spindle; and
FIG. 7 is a sectional view of the arrangement of FIG. 5.

### Detailed Description

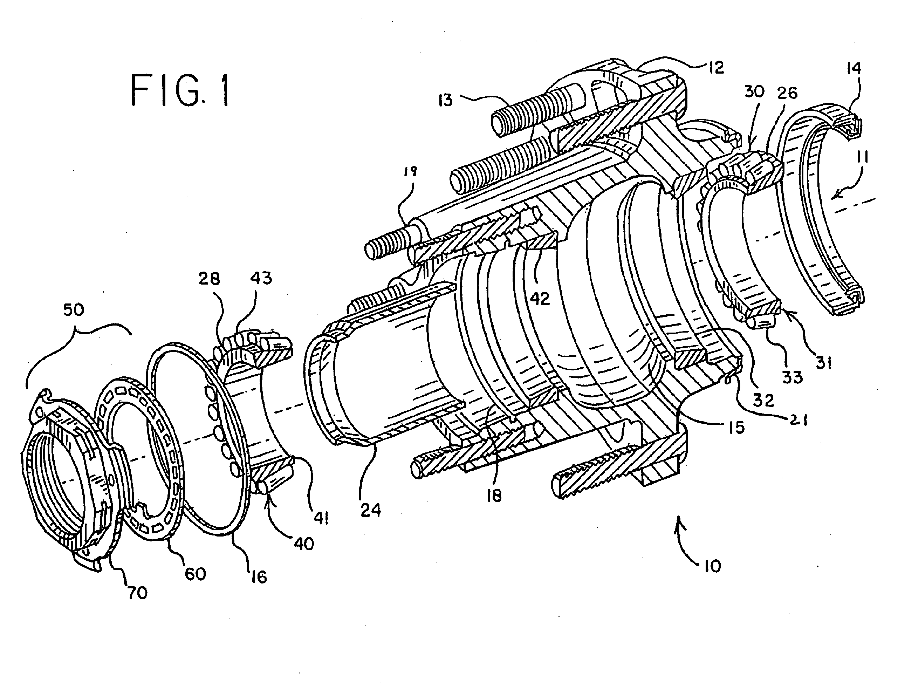

Referring to FIG. 1, an exploded assembly drawing of a novel wheel hub assembly 10 is illustrated. This hub assembly 10, in this embodiment, is intended for use with heavy-duty trucks. The hub assembly 10 includes a hub having a bore 11 extending from an inboard side to an outboard side of the hub 12. Within the bore 11 is housed a rotatably mounted bearing assembly.

The bearing assembly comprises, in one embodiment, the following components: an inboard bearing 30, an outboard bearing 40, and a spacer 24. The inboard and outboard bearings 30, 40 are tapered roller bearings in one embodiment. The inboard bearing 30 has a cone 31 which is affixed around a spindle (not shown) of a vehicle axle; a plurality of tapered rollers 33 and a cup 32 inside the hub 12. The outboard bearing 40 has a cone 41 which is affixed around a spindle (not shown) of a vehicle axle; a plurality of tapered rollers 43 and a cup 42 inside the hub 12.

The tapered rollers 33, 43 are captured between the cone 31, 41 and the cup 32, 42 of each of the bearings 30, 40. In some embodiments, a cage may also be present to maintain spacing between the rollers 33, 43.

In one embodiment, the bearing assembly may also include a spacer 24 to maintain the spacing between the inboard bearing 30 and the outboard bearing 40. The spacer 24 is machined to satisfy tight dimensional tolerances required for preassembled hub assemblies. Maintaining tight dimensional tolerances on the spacer 24, as well as the bearings 30, 40 and hub 12, allows the hub assembly 10 to be preassembled at a manufacturing facility, ready for immediate installation on a spindle with a minimum of manual adjustment.

In this embodiment, the spacer 24 is tubular, having an inboard end an outboard end through which the spindle (not shown) extends. The spacer 24 abuts the cone 31 of the inboard bearing 30 at one end and the cone 41 of the outboard bearing 40 at the other end.

The hub 12, in addition to housing the bearing assembly, also includes a number of design features, which, dependent upon the requirements of the specific application, may also be part of the hub assembly 10. For example, in one embodiment, as shown in FIG. 1, the hub has studs 13 to allow the tandem mounting of two wheels and tires (not shown) on a single spindle. In another application, the hub 12 has studs 13 onto which a single wheel and tire may be mounted. For hubs used on drive axle applications, in one embodiment, a set of drive studs 19 is used to connect to the flange of a drive axle shaft (not shown).

The hub 12 may also include, in some embodiments, an antilock braking system (ABS) tone ring 21 circumferentially affixed around the outer periphery of the hub on the inboard side of the hub assembly. The ABS tone ring has discrete sections around the circumference of the tone ring which induce pulses in a magnetic sensor (not shown) closely coupled to the tone ring. Electrical signals are produced by the sensor, allowing the ABS to determine the speed of the hub 12, and indirectly, the speed of the tire. With this velocity data, the ABS determines the appropriate braking power to be applied to the hub 12.

As shown in Figure 1, the inboard bearing 30 and outboard bearing 40 require high quality lubrication for reliable, long-term performance. Oil or grease may be used to lubricate the bearings, with any excess generally trapped within the hub cavity 15. To maintain the lubricant within the hub, a lubricant seal 14 is disposed at the inboard end of the hub 12, sealing the annular space between the hub and the spindle (not shown). The lubricant seal 14 may be, for example, an elastomeric material with metallic reinforcement having sufficient resiliency to seal the inner circumferential interface with the hub 12 and the outer circumference of the spindle.

In addition to its primary function of providing a sealing surface, the lubricant seal 14 affixes the axial position of the inboard bearing 30 relative to the hub 12. The lubricant seal 14 prevents the inboard bearing from disengaging from the hub during shipment and installation.

In order to retain the outboard bearing in place, a bore retaining ring 16 is used to affix the retaining nut 70 and washer 60 against the outboard bearing 40. In this embodiment, the bore retaining ring 16 is seated in a bore groove 18 on the bore surface, outboard of the outboard bearing 40. The axially inwardly directed surface of the bore retaining ring 16 abuts the axially outwardly directed surface of the retaining nut 70. The retaining nut in turn abuts a washer 60, and the washer abuts the outboard bearing 40.

In this embodiment, the spindle nut assembly 50 (i.e., the retaining nut and washer) and the outboard bearing 40 are retained inside the bore 11 by the bore retaining ring 16. As a result, in addition to retaining the outboard bearing 40, the spindle nut assembly 50 (retaining nut and washer) are pre-positioned and affixed to the preassembled hub assembly 10 ready for immediate installation. In this embodiment, the preassembled hub assembly 10 has no loose components.

In one embodiment, the assembly of the hub assembly 10 starts with the installation of the inboard bearing 30 into the inboard opening of the hub 12. The lubricant seal 14 is disposed in the inboard opening of the hub to a predetermined depth to seal and retain the inboard bearing 30 in the bore 11.

The spacer 24 is then inserted into the outboard opening of the bore 11 to abut the inboard cone 31 of the inboard bearing 30. The outboard bearing 40 is placed into outboard opening of the bore 11 with the outboard cone 41 of the outboard bearing 40 positioned to abut the outboard end of the spacer 24.

A washer 60 is disposed into the bore 11, abutting the outboard cone 41 of the outboard bearing 40. In this embodiment, the washer 60 is a standard flat washer with an opening concentric with the bore 11 and the outboard cone 41 of the outboard bearing 40.

A nut 70 is disposed inside the bore 11, immediately adjacent and abutting the washer 60. To retain the nut 70, washer 60, and outboard bearing 40 inside the hub, the bore retaining ring 16 is inserted into the outboard opening of the bore 11 and seated in the bore groove 18 in the surface of the bore.

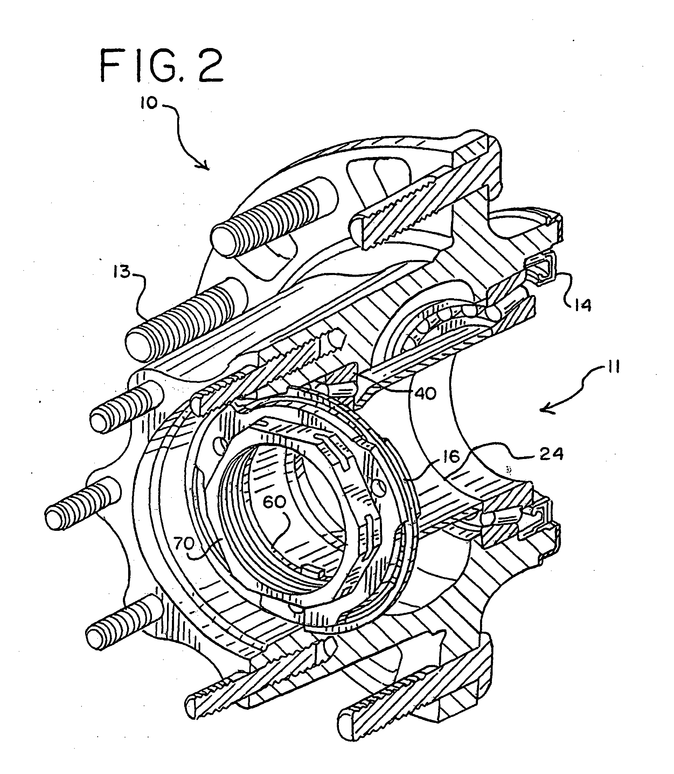

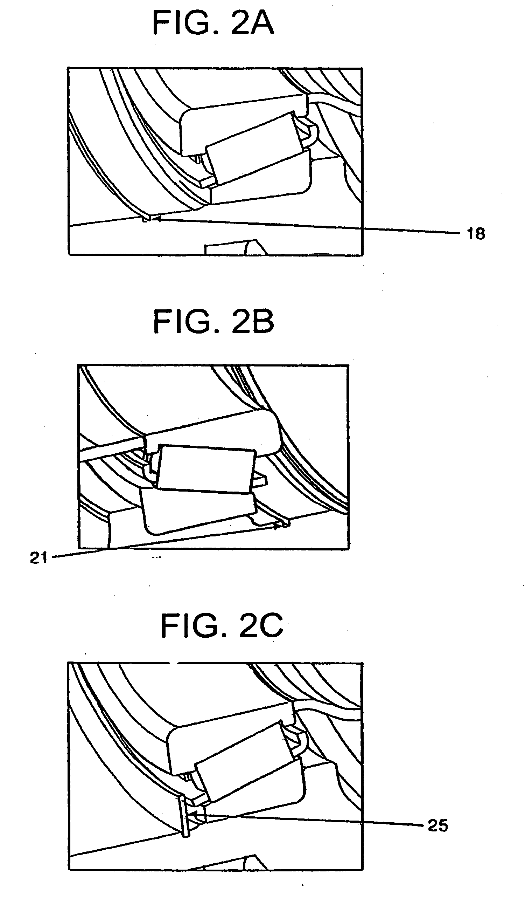

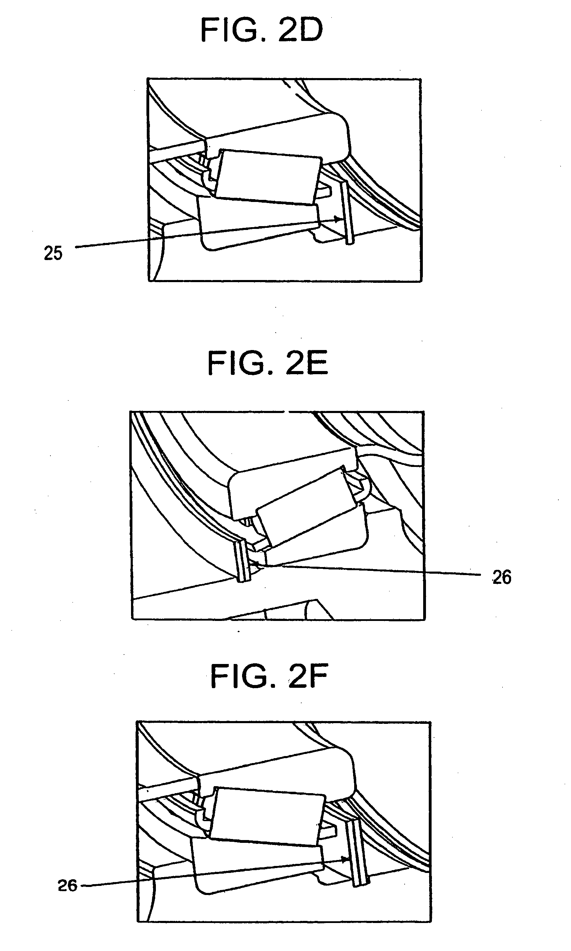

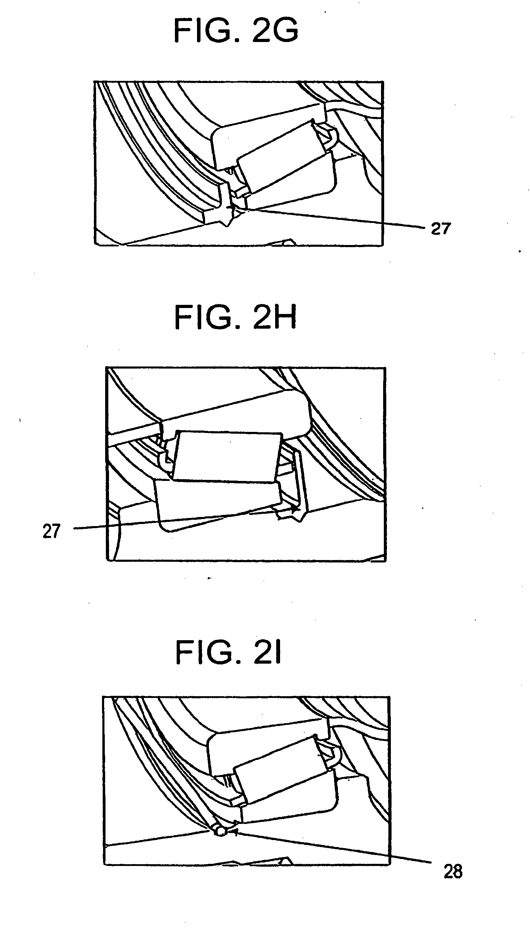

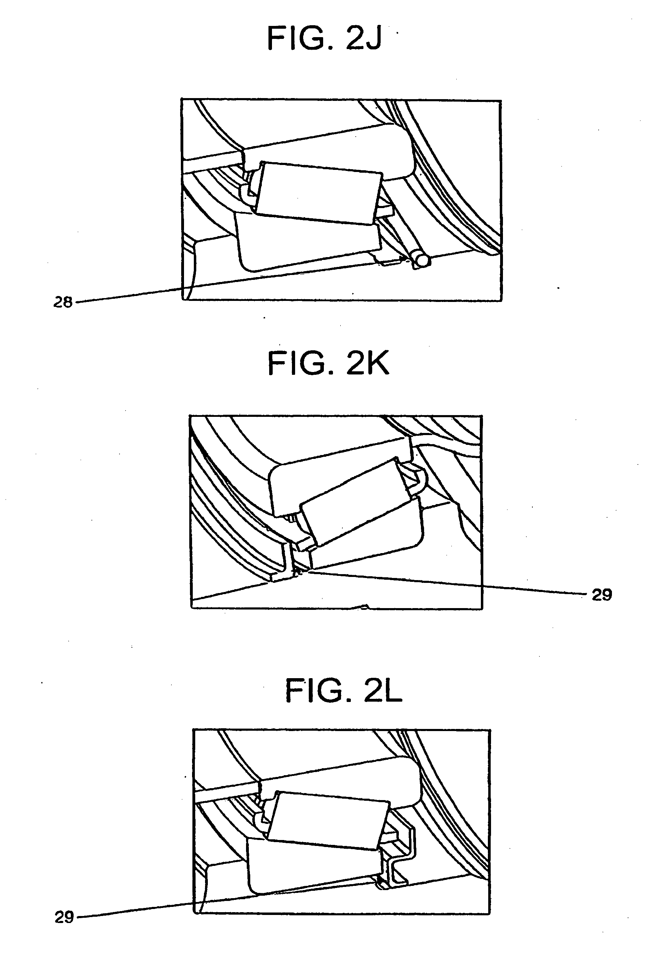

Other retaining components, that use a groove 18 as shown in Fig. 2a and groove 21 as shown in Fig. 2b, could also be used. Snap rings 25, may also be used as shown in Fig. 2c and 2d. A spiral retaining ring with an appropriate groove in the bore may be used as shown in Fig. 2e and 2f. In another embodiment, molded rings may also be employed as shown in Fig. 2g and 2h. In another embodiment, a non-circular formed wire may be inserted into a groove as shown in Fig. 2i and 2j. In still another embodiment, a "push-on" circular ring may be inserted into the bore as shown in Fig. 2 k and 21.

The push-on circular ring does not require a groove in which to seat. Instead, the push-on circular ring initially relies on an interference fit with the bore to establish resistance to axial loads. The push-on ring experiences deflection during installation as a result of the interference fit, resulting in the resilient urging of circumferential portions of the push-on retaining ring against the bore surface. Similarly, any means for establishing a partial or full circumferential shoulder in the bore to capture the spindle nut assembly against axially outward displacement may be used.

Turning to FIG. 2, a fully assembled, hub assembly 10 is illustrated of the embodiment illustrated in FIG. 1. With the bore retaining ring 16 seated in the groove 18, the retaining ring secures the retaining nut 70, the washer 60, and the outboard bearing 40 against outward axial displacement; allowing the hub assembly 10 to be safely shipped preassembled from the factory and ready for installation directly onto a spindle with, in this embodiment, all hub assembly components preassembled.

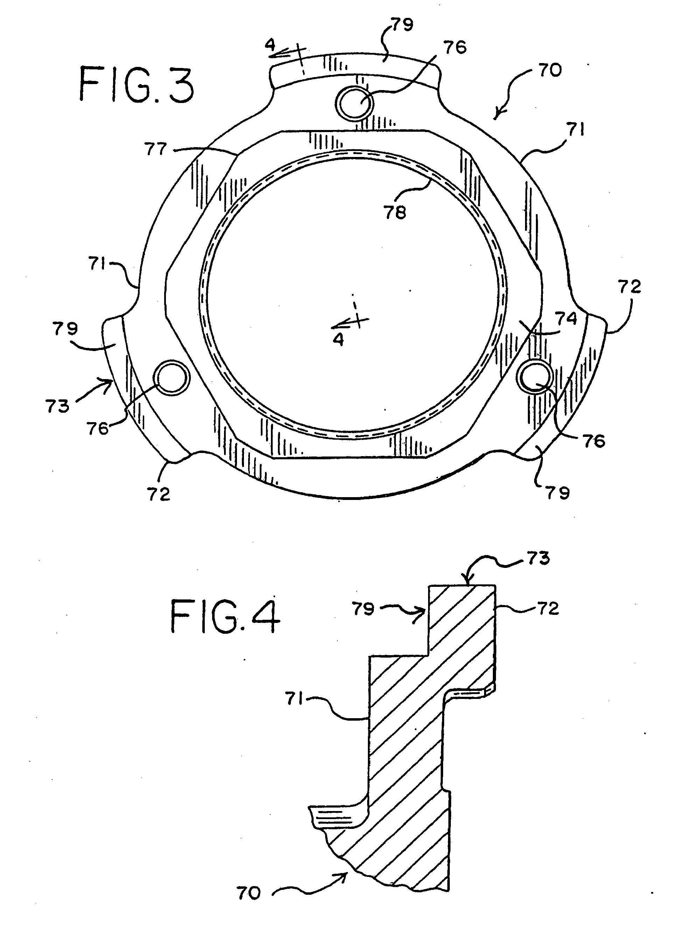

An exemplary front view of the retaining nut and its specific design elements are presented in FIG. 3. Turning to FIG. 3, an exemplary front view of the retaining nut 70 is illustrated. In this embodiment, the retaining nut 70 has a body 74 having a multi-faceted peripheral surface 77 on the outer periphery of the body. This multi-faceted peripheral surface 77 is designed to receive a tool to apply torque to the retaining nut 70. The body 74 of the retaining nut 70 also has an internal thread 78 running axially along the body to engage the externally threaded spindle (not shown).

In one embodiment, a flange 71 extends radially outward from the distal end of the body 74. In this embodiment, three pads 72 extend radially outward from the flange 71. The pads 72, in this embodiment, form a seating surface 79 for the bore retaining ring. The seating surface 79 for the bore retaining ring is, in this embodiment, the axially outwardly directed surface of the pads 72 when assembled into the bore of the hub. The axially inwardly directed surface of the bore retaining ring abuts the seating surface of the pads.

Each of the pads 72 have a surface 73 facing radially outward from the pad's outer peripheral edge. This surface 73 has a circular outer periphery that matches the curvature of the bore with which it contacts. The surface 73 on each of the three pads 72 allows the three pads 72 to concentrically align the retaining nut in the bore. The surfaces 73 also act as runners, allowing the retaining nut to rotate smoothly within the bore when torque is applied to the retaining nut.

In this retaining nut embodiment, a gap is maintained between the pads and between the flange and the surface of the bore. This gap allows lubricant to flow through the outboard bearing, to and from the hub cavity.

Turning to FIG. 4, a partial cross section view of the retaining nut 70 shown in FIG. 3 is illustrated. This view depicts a pad 72 extending axially from the flange 71. The pads 72, in this embodiment, have a surface on the inner periphery of the pad facing radially inward. This surface has an inner circular curvature conforming to portions of the outer circumference of the washer. In another embodiment, a pad 72 may extend completely around the flange 71 to totally encompass the entire washer circumference.

Although the pads simplify installation - assisting in the alignment of the washer with the retaining nut - they are not required in all embodiments. The retaining nut flange concentrically aligns the retaining nut in the bore. In this preferred embodiment, the radially outwardly directed circumferential surface of only the flange contacts and rides the bore surface. The flange may have openings or gaps to allow lubricant flow from the hub cavity to the outboard end of the hub assembly.

In conjunction with the retaining nut, a washer may be employed to resist the loss of pre-load compression. Any type of washer may be used ranging from simple flat washers to locking washers. In one embodiment, the washer is not required and the spindle nut assembly consists only of the retaining nut; the flange of the retaining nut functioning similar to a washer.

To counter the absence of a washer in this embodiment, the retaining nut itself may incorporate locking provisions. For example, in one embodiment, the retaining nut may have a locknut type design which includes a polymeric, anti-vibration insert.

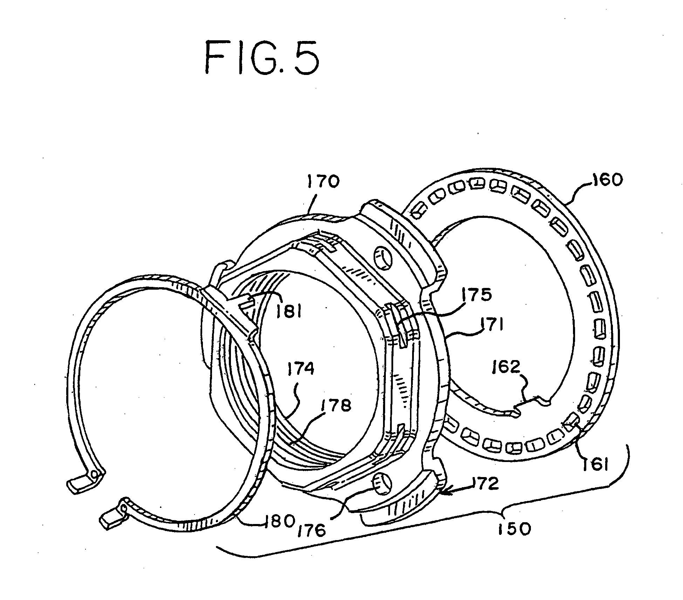

Other types of spindle nut assemblies may also be used in conjunction with the novel hub assembly. As an illustrative example, turning to FIG. 5, an isometric view of a second spindle nut assembly 150 arrangement is illustrated. In this arrangement, the spindle nut assembly has two main components: a washer 160 and a retaining nut 170, along with a third component, a nut retaining ring 180. The retaining nut 170 and washer 160 have design features that allow these components to interlock on the spindle to resist loss of pre-load compression on the bearing assembly.

The washer 160, in this arrangement, differs from the standard flat washer described above, This washer has a plurality of openings 161 spaced circumferentially around and near the outer periphery of the washer. In one arrangement, as illustrated in FIG. 5, the openings 161 extend to form a passage through the washer 160. In another arrangement, the openings 161 may not extend through the washer 160 and simply form cavities.

The washer 160 has, in this arrangement, a tang 162 extending radially inward from the inner circumference of the washer. The tang 162 engages with a keyway in the spindle to preclude relative rotational motion between the spindle and the washer 160. The retaining nut 170 in this arrangement abuts the washer 160 and is similar to the retaining nut described above. In this arrangement, however, the flange 171 has at least one aperture 176 extending axially through the flange. In addition, the retaining nut 170 has a series of retaining nut grooves 175 at the intersecting, faceted surfaces around the peripheral surface of the body 174 of the retaining nut 170 into which a nut retaining ring 180 is seated.
The nut retaining ring 180 in this arrangement is a snap ring having a pin 181 projecting axially from its circumference. The pin 181 is designed to extend through the aperture 176 in the retaining nut 170 and engage with at least one of the openings 161 in the washer 160. As a result, the pin 181 resists counter rotation of the retaining nut 170 with its engagement with the aperture 176 while anchored to the opening 161 in the washer 160.

This second arrangement of the spindle nut assembly 150 resists loss of pre-load compression by anchoring each component together and anchoring the washer to the spindle.

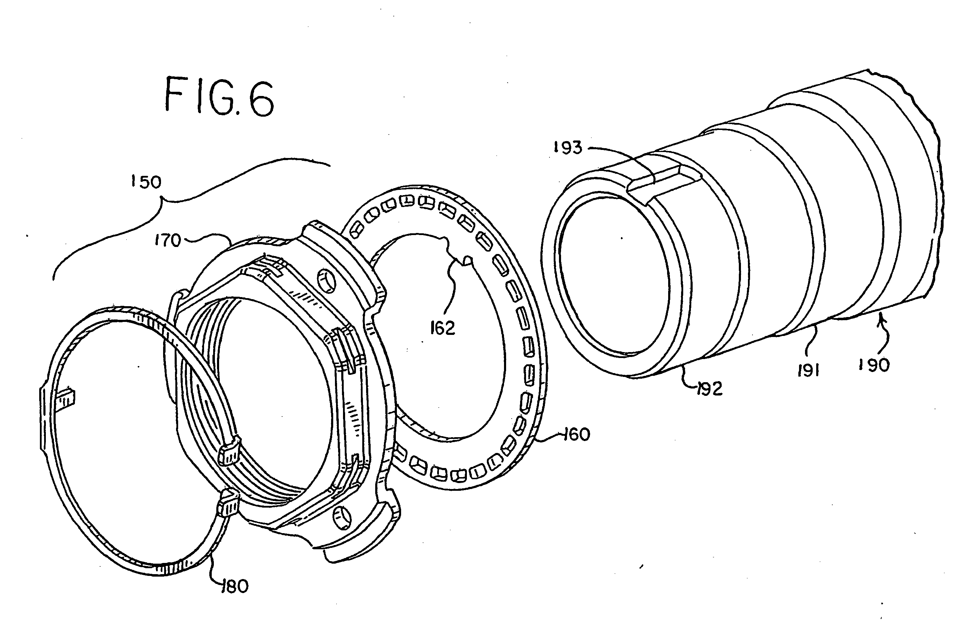

When received for installation, the hub assembly may be directly mounted to a spindle of a vehicle axle. Turning to FIG. 6, an exploded drawing of the spindle nut assembly 150 in conjunction with the spindle 191 to which the hub assembly is to be attached is illustrated. For ease of illustration and understanding, the hub assembly surrounding the spindle nut assembly 150 is not shown in this figure.

The installer engages the spindle 191 first through the lubricant seal, and then, sequentially through the inboard bearing, spacer, and outboard bearing. In this second embodiment of the spindle nut assembly 150, the spindle 191 is aligned to allow the keyway 193 to engage with the tang 162 of the washer 160, locking the washer to the spindle to preclude relative rotation between the washer and the spindle.

Other types of keyways and key attachment means may also be employed. For example, a separate key may be used to connect the washer to the spindle. In another embodiment, the spindle 191 may be milled to produce a flat section (not shown) on its peripheral surface. A "D" washer (i.e., a washer with an internal D shape) (not shown) is disposed on the spindle 191 to allow the internal flat of the washer 160 to engage with the external flat on the spindle to preclude relative rotational motion between the washer and the spindle.

Once the washer 160 is engaged with the spindle 191, the external thread 192 of the spindle 191 is engaged with the internal thread 178 of the retaining nut 170. The installer turns the retaining nut 170 to thread the retaining nut onto the external thread 192 of the spindle.191.

The installer applies sufficient torque to pull the spindle through the hub, allowing the tapered rollers to seat in the cones and cups of the bearings and achieve the desired pre-load compression on the bearing assembly. A calibrated torque wrench may be used to ensure the appropriate torque is applied to the spindle nut.

Once the pre-load compression has been achieved, the assembly is complete.

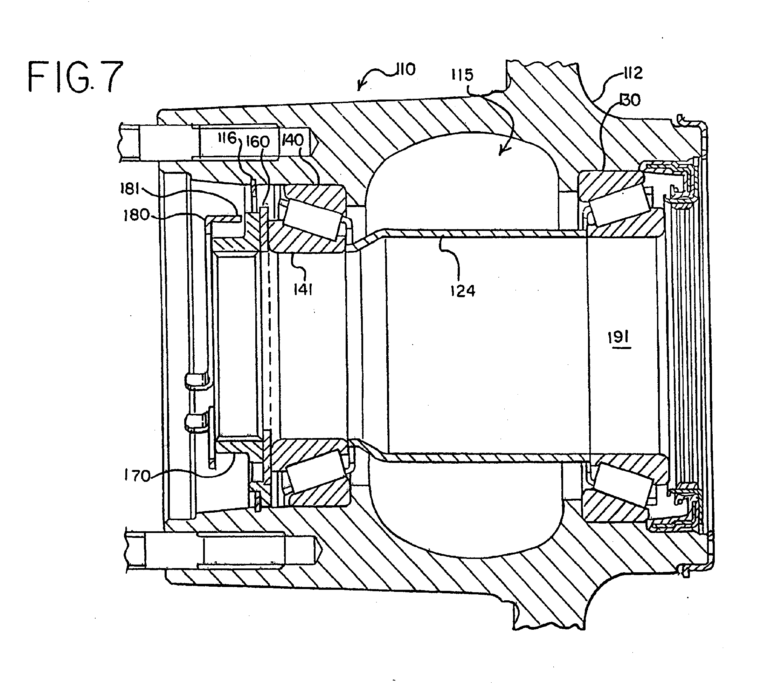

Turning to FIG. 7, a cross-sectional, orthographic view of the hub assembly 110, installed on a spindle 191, is depicted with the second embodiment of the spindle nut assembly. This figure illustrates the abutment of the washer 160 against the cone 141 of the outboard bearing 140. The retaining nut 170 concentrically abuts the washer 160. The bore retaining ring 116 abuts the retaining nut 170, restraining the retaining nut and washer 160 against axially outward displacement.

## Claims

1. A hub assembly comprising:
an inboard bearing (30);
an outboard bearing (40);
a hub (12) having a bore (11) extending from an outboard opening to an inboard opening, the inboard bearing (30) and the outboard bearing (40) housed in the bore (11) of the hub, the hub further having a groove (18);
a retaining ring (16) seated in the groove (18) in the hub;
a retaining nut (70) disposed in the bore, the retaining nut (70) having an axially inwardly directed surface and an axially outwardly directed surface, the axially inwardly directed surface facing the outboard bearing;
the hub assembly is a preassembled hub assembly with said retaining nut (70) prepositioned and affixed in the bore (11); and
**characterised in that**:
a spacer (24) is disposed between the inboard bearing (30) and the outboard bearing (40);
and **in that** the retaining nut includes a flange (71) extending radially outwardly for aligning the prepositioned retaining nut concentrically within the bore, wherein an outwardly directed circumferential surface of the flange (71), or outward facing surface of pads (72) extending radially outward from the flange, contact the bore surface.

2. The hub assembly of claim 1, further comprising a lubricant seal (14) disposed in the bore of the hub, the lubricant seal to affix the inboard bearing (30) against axially inward displacement.

3. The hub assembly of claim 1 or 2, further comprising a washer (60) disposed between the retaining nut (70) and the outboard bearing (40).

4. The hub assembly of claim 3, wherein the retaining nut (70) captures the washer (60) for aligning the washer (60) concentrically within the bore.

5. The hub assembly of claim 4, wherein the flange (71) extends axially inward to form a pad for capturing the washer (60).

6. The hub assembly of any of claims 3 to 5, wherein the washer (60) extends radially outward.

7. The hub assembly of any preceding claim, further comprising a push-on retaining ring.

8. The hub assembly of any of claims 1 to 7, wherein the retaining ring (16) is a snap ring.

9. The hub assembly of any of claims 1 to 7, wherein the retaining ring (16) is a spiral ring.

10. The hub assembly of any preceding claim wherein the retaining nut (70) has a body (74) having a multi-faceted peripheral surface (77) on the outer periphery of the body for receiving a tool to apply torque to the retaining nut.

11. The hub assembly of any preceding claim wherein the retaining nut (70) further includes one or more, and preferably three, pads (72) extending radially outward from the flange, the axially outwardly directed surface of the pads (72) forming a seating surface (79) for the retaining ring (16).

## Patentansprüche

1. Eine Nabenanordnung, aufweisend:
eine innenliegende Lagerung (30);
eine außenliegende Lagerung (40);
eine Nabe (12), die eine Bohrung (11) aufweist, die sich von einer außenliegenden Öffnung zu einer innenliegenden Öffnung erstreckt, wobei die innenliegende Lagerung (30) und die außenliegende Lagerung (40); in der Bohrung (11) der Nabe untergebracht sind, und die Nabe weiter eine Nut (18) aufweist;
einen in der Nut (18) der Nabe sitzenden Sicherungsring (16);
eine in der Bohrung angeordnete Sicherungsmutter (70), welche Sicherungsmutter (70) die eine axial nach innen gerichtete Oberfläche und eine axial nach außen gerichtete Oberfläche hat, wobei die axial nach innen gerichtete Oberfläche der außenliegenden Lagerung zugewandt ist;
wobei die Nabenanordnung eine vormontierte Nabenanordnung ist, bei der die genannte Sicherungsmutter (70) in der Bohrung (11) vorpositioniert und festgelegt ist;
und **dadurch gekennzeichnet, dass**
ein Distanzstück (24) zwischen der innenliegenden Lagerung (30) und der außenliegende Lagerung (40) angeordnet ist und
dass die Sicherungsmutter einen sich radial nach außen erstreckenden Flansch (71) beinhaltet, um die vorpositionierte Sicherungsmutter konzentrisch in der Bohrung auszurichten, wobei eine nach außen gerichtete, umlaufende Oberfläche des Flansches (71), oder nach außen gewendete Oberfläche von sich radial nach außen erstreckenden Vorsprüngen (72), die Oberfläche der Bohrung berühren.

2. Die Nabenanordnung nach Anspruch 1, weiterhin eine in der Bohrung der Nabe angeordnete Schmiermitteldichtung (14) aufweisend, welche Schmiermittelichtung die innenliegende Lagerung (30) gegen axiale Verlagerung nach innen festlegt.

3. Die Nabenanordnung nach Anspruch 1 oder 2, weiterhin eine Scheibe (60) aufweisend, die zwischen der Sicherungsmutter (70) und der außenliegenden Lagerung (40) angeordnet ist.

4. Die Nabenanordnung nach Anspruch 3, wobei die Sicherungsmutter (70) die Scheibe (60) erfasst, um die Scheibe (60) konzentrisch in der Bohrung auszurichten.

5. Die Nabenanordnung nach Anspruch 4, wobei der Flansch (71) sich axial nach innen erstreckt, um einen Vorsprung zum Erfassen der Scheibe (60) bilden.

6. Die Nabenanordnung nach einem der Ansprüche 3 bis 5, wobei die Scheibe (60) sich radial nach außen erstreckt.

7. Die Nabenanordnung nach einem der voranstehenden Ansprüche, weiterhin einen Aufschiebesicherungsring aufweisend.

8. Die Nabenanordnung nach einem der Ansprüche 1 bis 7, wobei der Sicherungsring (16) ein Sprengring ist.

9. Die Nabenanordnung nach einem der Ansprüche 1 bis 7, wobei der Sicherungsring (16) ein Spiralring ist.

10. Die Nabenanordnung nach einem der voranstehenden Ansprüche, wobei die Sicherungsmutter (70) einen Körper (74) aufweist, der eine facettenreiche, periphere Oberfläche (77) auf der Außenperipherie des Körpers zum Eingreifen eines Werkzeugs hat, um Drehmomente auf die Sicherungsmutter zu übertragen.

11. Die Nabenanordnung nach einem der voranstehenden Ansprüche, wobei die Sicherungsmutter (70) weiterhin einen oder mehrere, und vorzugsweise drei Vorsprünge (72) beinhaltet, die sich vom Flansch radial nach außen erstrecken, wobei die axial nach außen gerichtete Oberfläche der Vorsprünge (72) eine Auflagefläche (79) für den Sicherungsring (16) bildet.

## Revendications

1. Ensemble de moyeu comprenant :
un palier interne (30) ;
un palier externe (40) ;
un moyeu (12) ayant un alésage (11) s'étendant d'une ouverture externe à une ouverture interne, le palier interne (30) et le palier externe (40) étant logés dans l'alésage (11) du moyeu, le moyeu ayant en outre une rainure (18) ;
une bague de retenue (16) logée dans la rainure (18) du moyeu ;
un écrou de retenue (70) disposé dans l'alésage, l'écrou de retenue (70) ayant une surface dirigée axialement vers l'intérieur et une surface dirigée axialement vers l'extérieur, la surface dirigée axialement vers l'intérieur faisant face au palier externe ;
l'ensemble de moyeu étant un ensemble de moyeu pré-assemblé avec ledit écrou de retenue (70) pré-positionné et fixé dans l'alésage (11) ; et **caractérisé en ce qu'**un élément d'espacement (24) est disposé entre le palier interne (30) et le palier externe (40) ; et
l'écrou de retenue comprend une bride (71) s'étendant radialement vers l'extérieur pour aligner l'écrou de retenue pré-positionné concentriquement dans l'alésage, dans lequel une surface circonférentielle de la bride (71) dirigée vers l'extérieur ou une surface de ressauts (72) tournée vers l'extérieur s'étendant radialement vers l'extérieur de la bride vient en contact avec la surface de l'alésage.

2. Ensemble de moyeu selon la revendication 1, comprenant en outre un joint étanche aux lubrifiants (14) disposé dans l'alésage du moyeu, le joint étanche aux lubrifiants permettant de fixer le palier interne (30) à l'encontre d'un déplacement axial vers l'intérieur.

3. Ensemble de moyeu selon la revendication 1 ou la revendication 2, comprenant en outre une rondelle (60) disposée entre l'écrou de retenue (70) et le palier externe (40).

4. Ensemble de moyeu selon la revendication 3, dans lequel l'écrou de retenue (70) capture la rondelle (60) pour aligner la rondelle (60) concentriquement dans l'alésage.

5. Ensemble de moyeu selon la revendication 4, dans lequel la bride (71) s'étend axialement vers l'intérieur pour former un ressaut permettant de capturer la rondelle (60).

6. Ensemble de moyeu selon l'une quelconque des revendications 3 à 5, dans lequel la rondelle (60) s'étend radialement vers l'extérieur.

7. Ensemble de moyeu selon l'une quelconque des revendications précédentes, comprenant en outre une bague de retenue à emboîtement.

8. Ensemble de moyeu selon l'une quelconque des revendications 1 à 7, dans lequel la bague de retenue (16) est un circlip.

9. Ensemble de moyeu selon l'une quelconque des revendications 1 à 7, dans lequel la bague de retenue (16) est une bague spiralée.

10. Ensemble de moyeu selon l'une quelconque des revendications précédentes, dans lequel l'écrou de retenue (70) a un corps (74) ayant une surface périphérique à facettes multiples (77) sur la périphérie externe du corps pour recevoir un outil afin d'appliquer un couple de torsion à l'écrou de retenue.

11. Ensemble de moyeu selon l'une quelconque des revendications précédentes, dans lequel l'écrou de retenue (70) comprend en outre un ou plus, de préférence trois ressauts (72) s'étendant radialement vers l'extérieur depuis la bride, la surface des ressauts (72) dirigée axialement vers l'extérieur formant une surface de siège (79) pour la bague de retenue (16).
